# EUROPÄISCHE PATENTSCHRIFT

(11) **EP 0 708 788 B1**
(45) Veröffentlichungstag und Bekanntmachung des Hinweises auf die Patenterteilung: **19.01.2000**
(21) Anmeldenummer: 94920942.3
(22) Anmeldetag: 16.06.1994
(51) Int. Cl.: C08G 18/08, C09D 175/04

(54) **ÜBERZUGSMITTEL AUF DER BASIS VON POLYURETHANHARZEN UND IHRE VERWENDUNG**
COATINGS BASED ON POLYURETHANE RESINS AND THEIR USE
REVETEMENTS A BASE DE RESINES POLYURETHANNE ET LEUR UTILISATION

(30) Priorität: 24.06.1993 DE 4320969
(43) Veröffentlichungstag der Anmeldung: 01.05.1996
(73) Patentinhaber: BASF Coatings Aktiengesellschaft, 48165 Münster (DE)
(72) Erfinder: MAYER, Bernd, D-48165 Münster (DE); GRABBE, Michael, D-48308 Senden (DE); RINK, Heinz-Peter, D-48153 Münster (DE); MEISENBURG, Uwe, D-47259 Duisburg (DE)
(74) Vertreter: Fitzner, Ulrich, Dr.
(86) Internationale Anmeldenummer: EP9401956
(87) Internationale Veröffentlichungsnummer: WO9500570

(56) Entgegenhaltungen:
- EP-A- 0 261 775
- DE-A- 4 013 546

## Beschreibung

Gegenstand der vorliegenden Erfindung ist ein Überzugsmittel auf der Basis von Polyurethanharzen, bei dem in einem Ester als Losemittel aus
a) mindestens einer Verbindung mit 2 Hydroxyl- und/oder Aminogruppen,
b) mindestens einem Di- und/oder Polyisocyanat,
c) mindestens einer Verbindung, die zwei gegenüber Isocyanatgruppen reaktive Gruppen enthält, wobei zumindest ein Teil dieser Verbindungen mindestens eine Carboxyl-, Sulfonsäure- und/oder Phosphonsäuregruppe aufweist, die vor oder nach dem Einbau der Komponente (1 c) in das Polyurethanmolekül neutralisiert wird, und
d) mindestens einer Verbindung mit mindestens 3 Hydroxyl- und/oder Aminogruppen
ein Polyurethanharz hergestellt wird, wobei bevorzugt aus den Komponenten (a), (b) und (c) ein endständige Isocyanatgruppen aufweisendes Zwischenprodukt hergestellt wird, dessen freie Isocyanatgruppen anschließend zumindest teilweise mit der Komponente (d) umgesetzt werden.

Die vorliegende Erfindung betrifft außerdem die Verwendung der Überzugsmittel, Verfahren zur Herstellung dieser Überzugsmittel sowie Verfahren zum Beschichten von Substraten unter Verwendung dieser Überzugsmittel.

Dem Fachmann sind wäßrige Polyurethandispersionen sowie Verfahren zu ihrer Herstellung bekannt. Von technischer Bedeutung ist insbesondere das sogenannte Acetonverfahren. Hierbei wird im allgemeinen zunächst ein Präpolymer mit NCO-Endgruppen hergestellt, welches anschließend in einem inerten Lösungsmittel gelöst wird, worauf sich gegebenenfalls die Rettenverlängerung in Lösung zum höhermolekularen Polyurethan anschließt. Die bei dem sogenannten Acetonverfahren verwendeten Lösungsmittelzusätze von Niedrigsiedern, wie z.B. Aceton, sind u.a. notwendig, um die Viskosität des Präpolymeren zu senken und dieses damit handhabbar zu machen, wodurch eine anschließende Dispergierung erst möglich wird.
Der Nachteil solcher Herstellverfahren ist unter der Berücksichtigung der meisten vorhandenen Forderung nach lösemittelfreien Produkten, daß ein technisch aufwendiger Destillationsschritt an das Dispergierverfahren angeschlossen werden muß, um den Niedrigsieder, wie Aceton, zumindest überwiegend zu entfernen. Ketone, wie z.B. Aceton, bedingen nämlich schlechte lacktechnologische Eigenschaften im wäßrigen System. Zudem sind Ketone, wie Aceton, fischgiftig und zeichnen sich durch relativ niedrige Flammpunkte (Aceton - 18°C, Methylethylketon - 4,4°C und Methylisobutylketon + 15,5°C) aus. In den USA sind Methylethylketon und Methylisobutylketon auf der Liste der gefährlichen luftverschmutzenden Substanzen, so daß auch Restmengen im Lack vermieden werden sollten.
Der Austausch von Ketonen gegen andere Lösemittel wird in einem Stripp-Prozeß durchgeführt. Hierbei entfernt man das Keton im Gemisch mit dem zweiten Lösemittel unter Vakuum. Dies bedeutet einen zusätzlichen Verfahrensschritt, der das Verfahren nicht nur verkompliziert, sondern auch zu einer Verteuerung des Produkts führt. Dies nicht zuletzt deshalb, weil das vorzugsweise eingesetzte Aceton nicht wieder ohne weiteres in den Prozeß zurückgeführt werden kann, da bevorzugt wasserfreies Aceton eingesetzt wird. Somit stellt sich für den Fachmann die Frage, ob und ggf. bis zu welcher Menge ein Restlösemittelgehalt akzeptabel ist, da davon der Verfahrensaufwand abhängt. Um die Forderung nach einem gänzlich lösemittelfreien, nach diesem Verfahren hergestellten Produkt zu erfüllen, ist ein vergleichsweiser hoher Aufwand notwendig.

Es besteht daher der Wunsch nach Lösemittelersatzstoffen, die statt der bislang bekannten verwendeten Lösemittel bei der Herstellung von wäßrigen Polyurethandispersionen eingesetzt werden können. Die zu Ketonen alternativ verwendeten Lösemittel müssen dabei einige Anforderungen erfüllen:
- Zündtemperaturen > 200°C
- inert gegenüber Isocyanaten (auch eventuelle Verunreinigungen)
- großtechnisch verfügbar
- ausreichende Wassermischbarkeit (kann eventuell durch Cosolventien verbessert werden)
- Flammpunkt > 55°C
- lacktauglich (Verdampfbarkeit)
- günstiger Preis
- geeigneter Siedepunkt.

Neben Ketonen sind grundsätzlich auch Ether und Ester zur Synthese von Polyurethanharzen einsetzbar. Aus der DE-OS-40 13 546 ist es daher bekannt, mit Essigsäure veresterte Propandiole und/oder Triole als Lösemittel für die Herstellung von Polyurethandispersionen nach an sich bekannten Verfahren einzusetzen.

Die Verwendung dieser in der DE-OS-40 13 546 beschriebenen Losemittel weist aber den Nachteil auf, daß Ester der Essigsäure, wie z.B. Methoxipropylacetat, Ethoxipropylacetat und Butoxipropylacetat, im allgemeinen hydrolyseempfindlich sind. Außerdem sind sie nicht zur Herstellung von Polyurethanen bei erhöhten Temperaturen von 100 bis 130°C geeignet, da sie sich im Reaktionsgemisch bei diesen Temperaturen bereits merklich zersetzen. Aufgrund immer schärferer Umweltauflagen besteht jedoch die Forderung nach möglichst festkörperreichen Polyurethanharzlösungen, deren Herstellung zur Beherrschung der Viskositätsprobleme aber die Anwendung erhöhter Temperaturen erfordert. Außerdem sind höhere Temperaturen aufgrund der damit verbundenen Reaktionszeitverkürzung wünschenswert.
Ferner ist beispielsweise Methoxipropylacetat in der Praxis ungeeignet, da es mit 50 ppm einen zu niedrigen MAK-Wert (maximale Arbeitsplatzkonzentration) aufweist. Außerdem ist Methoxipropylacetat in der Schwangerschaftsgruppe C eingestuft. Ethoxipropylacetat weist den Nachteil auf, daß die resultierenden Polyurethanlösungen eine sehr hohe Viskosität aufweisen. Butoxipropylacetat schließlich scheidet aufgrund der schlechten Wasserlöslichkeit aus.

Aus der DE-OS 41 10 520 ist es bekannt, Polyurethanharze in solchen Lösemitteln herzustellen, die im Lack verbleiben und nicht ausgetauscht werden müssen. Als Beispiele für geeignete Lösemittel werden Methoxipropylacetat, Ethoxiethylacetat (gebräuchliche Bezeichnung für Ethylenglykolmonoethyletheracetat) und N-Methylpyrrolin genannt. Die genannten Acetate weisen jedoch die bereits aufgeführten Nachteile auf. Darüber hinaus weist Ethoxiethylacetat den Nachteil auf, daß dieses Lösemittel aufgrund der geltenden Bestimmungen beispielsweise in den USA nicht zum Einsatz gelangen kann. Diese aus der DE-OS 41 10 520 genannten Acetate kommen daher in der Praxis ebenfalls nicht zum Einsatz. N-Methylpyrrolidon (NMP) schließlich weist den Nachteil auf, daß es insbesondere bei niedrigen Temperaturen nicht aus dem Lackfilm abdampft. Zudem weisen die in NMP hergestellten Harze im Vergleich zu in EEP hergestellten Harzen höhere Viskositäten auf. Darüber hinaus ist die Farbzahl der in NMP hergestellten Harze höher.

Schließlich ist aus der EP-A-261 775 die Verwendung von Ethoxiethylpropionat als Lösemittel für Bindemittelzusammensetzungen für Formmassen bekannt, die Phenolharz und eine Isocyanatkomponente enthalten.

Der vorliegenden Erfindung liegt somit die Aufgabe zugrunde, ein Verfahren zur Herstellung von Polyurethanharzen zur Verfügung zu stellen, das die kostengünstige und strippprozeßfreie Herstellung von Polyurethandispersionen ermöglicht. Dabei sollte das Verfahren auch die Herstellung festkörperreicher Polyurethanharzlösungen ermöglichen. Ferner sollten die nach diesem Verfahren hergestellten Polyurethandispersionen bei dem Einsatz in wäßrigen Überzugsmitteln zu Beschichtungen führen, deren mechanische Eigenschaften möglichst weitgehend den Eigenschaften der Beschichtungen entsprechen, die unter Verwendung herkömmlich hergestellter Polyurethandispersionen erhalten werden.

Diese Aufgabe wird überraschenderweise durch ein Verfahren der eingangs genannten Art gelöst, das dadurch gekennzeichnet ist, daß das Polyurethanharz in Ethoxiethylpropionat (EEP) als Lösemittel hergestellt wird.

Gegenstand der vorliegenden Erfindung ist außerdem die Verwendung der Polyurethanharze sowie die Verwendung von Ethoxiethylpropionat als Lösemittel zur Herstellung von Polyurethanharzen. Außerdem betrifft die Erfindung auch Überzugsmittel, die diese Polyurethanharze enthalten, Verfahren zur Herstellung dieser Überzugsmittel sowie Verfahren zum Beschichten von Substraten unter Verwendung dieser Überzugsmittel und mit diesen Überzugsmitteln beschichtete Substrate.

Es ist überraschend und war nicht vorhersehbar, daß gerade der Einsatz von Ethoxiethylpropionat als Lösemittel zur Herstellung von Polyurethandispersionen in an sich bekannten Verfahren die stripprozeßfreie, kostengünstige Herstellung von Polyurethandispersionen ermöglicht. Dabei ist Ethoxiethylpropionat kommerziell verfügbar und ohne weiteres in größeren Mengen erhältlich. Vorteilhaft ist ferner, daß bei Verwendung von Ethoxiethylpropionat als Lösemittel aufgrund der guten viskositätsregulierenden Eigenschaften und der guten Beständigkeit bei erhöhten Temperaturen auch festkörperreiche Polyurethanharzlösungen hergestellt werden können. Die nach dem erfindungsgemäßen Verfahren hergestellten Polyurethanharzlösungen sind dabei über eine lange Zeitspanne von ca. mindestens 12 Monaten lagerstabil. Außerdem weist die Verwendung von Ethoxiethylpropionat als Lösemittel in den bekannten Verfahren zur Herstellung der Polyurethandispersionen den Vorteil auf, daß die anderen Verfahrensparameter nicht wesentlich geändert werden müssen. Schließlich weisen Beschichtungen, die unter Verwendung der erfindungsgemäß hergestellten Polyurethandispersionen hergestellt wurden, gute mechanische Eigenschaften auf, die mit den Eigenschaften von Beschichtungen vergleichbar sind, die unter Verwendung herkömmlich hergestellter Polyurethandispersionen erhalten wurden.

Im folgenden wird nun das erfindungsgemäße Verfahren näher erläutert.

Es ist erfindungswesentlich, daß in den an sich bekannten Verfahren zur Herstellung von Polyurethandispersionen Ethoxiethylpropionat als Lösemittel anstelle der üblicherweise eingesetzten Lösemittel verwendet wird. Ethoxiethylpropionat (auch 3-Ethoxipropionsäureethylester genannt) ist dabei in hervorragenderweise als Ersatzstoff für diese bislang üblichen und bekannten Lösemittel geeignet. Ethoxiethylpropionat ist gegenüber den zur Herstellung der Polyurethanharze eingesetzten Ausgangsstoffe nicht reaktiv und die erhaltenen Polyurethanharzlösungen sind über einen langen Zeitraum (mindestens 12 Monate) lagerstabil. Ethoxiethylpropionat ist außerdem kommerziell verfügbar und ohne weiteres in größeren Mengen erhältlich. Bei Einsatz von Ethoxiethylpropionat als Lösemittel anstelle der bislang üblichen Lösemittel müssen außerdem die anderen Verfahrensparameter nicht wesentlich geändert werden. Eine Umstellung auf das erfindungsgemäße Verfahren kann daher einfach und schnell sowie kostengünstig durchgeführt werden.

Unter Umständen kann es angezeigt sein, bei dem erfindungsgemäßen Verfahren bei einem erhöhten Reaktionsfestkörper (d.h. Lösemittelgehalt bei der Herstellung des Polyurethanharzes bevorzugt von weniger als 20 Gew.-%, bezogen auf den Festkörper) und/oder Erhöhung des Anteils an Modifizierungsmittel und/oder Erhöhung der Reaktionstemperatur (besonders bevorzugter Bereich 100 bis 130°C) zu arbeiten, um so zu gewährleisten, daß das zahlenmittlere Molekulargewicht des erhaltenen Polyurethanharzes dem zahlenmittleren Molekulargewicht des auf herkömmliche Weise hergestellten Harzes entspricht. Dies kann aber anhand weniger Routineversuche leicht ermittelt werden.

Die zur Herstellung der Polyurethanharzlösungen bzw. Polyurethandispersionen geeigneten Ausgangsstoffe, wie z.B. Polyole, Isocyanate, Kettenverlängerungsmittel, reaktive zur Salzbildung befähigte Komponenten sowie weitere Hilfsstoffe, sind bekannt, und beispielsweise in den folgenden Schriften beschrieben:

DE-OS 26 24 442, DE-OS 32 10 051, EP-A 355 433, DE-OS 35 45 618, DE-OS 38 13 866, DE-OS 40 05 961, DE-OS 41 10 520 und DE-OS 40 13 546. Wegen Beispielen für geeignete Aufbaukomponenten der Polyurethanharze sei daher auf diese Schriften verwiesen.

Bei dem erfindungsgemäßen Verfahren zur Herstellung des Polyurethanharzes wird bevorzugt zunächst ein isocyanatgruppenaufweisendes Präpolymer hergestellt, aus dem dann durch weitere Umsetzung, bevorzugt Kettenverlängerung, das gewünschte Polyurethanharz hergestellt wird. Die Umsetzung der Komponenten (a), (b) und (c) erfolgt dabei nach den gut bekannten Verfahren der organischen Chemie (vgl. z.B. Kunststoff-Handbuch, Band 7: Polyurethane, herausgegeben von Dr. Y. Oertel, Karl-Hanser-Verlag, München, Wien 1983), wobei bevorzugt eine stufenweise Umsetzung der Komponenten (z.B. Bildung eines ersten Zwischenproduktes aus den Komponenten (a) und (b), das dann mit (c) zu einem zweiten Zwischenprodukt umgesetzt wird) durchgeführt wird. Es ist aber auch eine gleichzeitige Umsetzung der Komponenten (a), (b) und (c) möglich. Beispiele für die Herstellung der Präpolymeren sind in der DE-OS 26 24 442 und der DE-OS 32 10 051 beschrieben. Daneben ist zur Herstellung der Polyurethanharze aber auch eine gleichzeitige Umsetzung der Komponenten (a), (b), (c) und (d) möglich.

Die Reaktionstemperatur bei der Herstellung des Präpolymers aus den Komponenten (a), (b) und (c) beträgt üblicherweise bis zu 150°C, bevorzugt zwischen 80 und 150°C, besonders bevorzugt 100 bis 120°C. Höhere Reaktionstemperaturen von 100 bis 120°C führen dabei zur Reaktionszeitverkürzung und sind außerdem bei der Herstellung festkörperreicher Polyurethanharzlösungen erwünscht, da so eine leichtere Handhabbarkeit der Harzlösungen (Viskositätserniedrigung) gegeben ist.

Die Umsetzung der Komponenten (a), (b) und (c) erfolgt in Ethoxiethylpropionat als Lösemittel. Die Menge an Ethoxiethylpropionat kann dabei in weiten Grenzen variieren und sollte zur Bildung einer Präpolymerlösung mit geeigneter Viskosität ausreichen. Im allgemeinen werden bis zu 70 Gew.-%, bevorzugt 5 bis 50 Gew.-% und besonders bevorzugt weniger als 20 Gew.-% Lösemittel, bezogen auf den Festkörper, eingesetzt. So kann die Umsetzung beispielsweise ganz besonders bevorzugt bei einem Lösemittelgehalt von 10 - 15 Gew.-% EEP, bezogen auf den Festkörper, durchgeführt werden.
Die Umsetzung der Komponenten (a), (b) und (c) kann gegebenenfalls in Gegenwart eines Katalysators, wie Organozinnverbindungen und/oder tertiären Aminen, erfolgen.
Zur Herstellung der Präpolymeren werden die Mengen der Komponenten (a), (b) und (c) so gewählt, daß das Aquivalentverhältnis von NCO- zu OH-Gruppen zwischen 2,0 : 1,0 und > 1,0 : 1,0, bevorzugt zwischen 1,4 : 1 und 1,1 : 1, liegt.
Das NCO-Präpolymer enthält wenigstens etwa 0,5 Gew.-% Isocyanatgruppen, vorzugsweise wenigstens 1 Gew.-% NCO, bezogen auf den Feststoff. Die obere Grenze liegt bei etwa 15 Gew.-%, vorzugsweise 10 Gew.-%, besonders bevorzugt bei 5 Gew.-% NCO.

Die zur Herstellung des Präpolymeren eingesetzten Polyole (Komponente (a)) können niedermolekular und/oder hochmolekular sein und sie können reaktionsträge anionische Gruppen enthalten. Um die Härte des Polyurethans zu erhöhen, kann man niedermolekulare Polyole einsetzen. Sie haben ein Molekulargewicht von 60 bis zu etwa 400 und können aliphatische, alicyclische oder aromatische Gruppen enthalten. Es werden dabei Mengen von bis zu 30 Gew.-% der gesamten Polyolbestandteile, bevorzugt etwa 2 bis 20 Gew.-%, eingesetzt.
Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer zahlenmittleren Molmasse Mn von 400 bis 5000 bestehen. Die ausgewählten Polyetherdiole sollten keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder Polycarbonsäuren mit einer höheren Wertigkeit eingesetzt werden. Bevorzugt werden lineare Polyesterdiole eingesetzt.

Als Beispiele für Polyetherpolyole seien Polyoxialkylenpolyole, insbesondere Polyoxipropylenglykole mit einem Molekulargewicht von 300 bis 3000 (Zahlenmittel), genannt.
Es können als Komponente (a) auch Polyesterpolyole eingesetzt werden, deren Säurekomponente zumindest zum Teil aus dimeren Fettsäuren besteht. Derartige Systeme sind beispielsweise in der US-PS 4 423 179 beschrieben. Außer den aufgeführten Diolen sind zur Herstellung des Präpolymeren als Komponente (a) auch aminogruppenhaltige Verbindungen geeignet, bevorzugt werden jedoch die aufgeführten Di- und Polyole eingesetzt.

Als typische multifunktionelle Isocyanate (Komponente (b)) werden aliphatische, cycloaliphatische und/oder aromatische Polyisocyanate mit mindestens 2 Isocyanatgruppen pro Molekül verwendet. Bevorzugt werden die isomeren oder isomeren Gemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung. Die zur Bildung des Präpolymeren gebrauchte Polyisocyanatkomponente kann auch einen Anteil höherwertiger Polyisocyanate enthalten, vorausgesetzt, dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Zur Herstellung festkörperreicher Polyurethanharzlösungen werden insbesondere Diisocyanate der allgemeinen Formel (I) 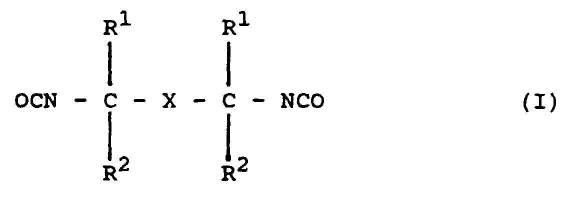 eingesetzt, wobei X für einen zweiwertigen, aromatischen Kohlenwasserstoffrest, vorzugsweise für einen gegebenenfalls Halogen-, Methyl- oder Methoxi-substituierten Naphthylen-, Diphenylen- oder 1,2-, 1,3- oder 1,4-Phenylenrest, besonders bevorzugt für einen 1,3-Phenylenrest und R₁ und R₂ für einen Alkylrest mit 1 bis 4 Kohlenstoffatomen, besonders bevorzugt für einen Methylrest, stehen.

Diisocyanate der Formel (I) sind bekannt (ihre Herstellung wird beispielsweise in der EP-A 101 832, US-PS 3,290,350, US-PS 4,130,577 und der US-PS 4,439,616 beschrieben) und zum Teil im Handel erhältlich (1,3-Bis(2-isocyanatoprop-2-yl)benzol wird beispielsweise von der American Cynamid Company unter dem Handelsnamen TMXDI (META)® verkauft).

Zusätzlich zu den Diisocyanaten der Formel (I) oder stattdessen können auch noch andere aliphatische und/oder cycloaliphatische und/oder aromatische Polyisocyanate eingesetzt werden. Als Beispiele für zusätzlich einsetzbare Polyisocyanate werden 1,3- und 1,4-Phenylendiisocyanat, 2,4- und 2,6-Toluylendiisocyanat, Xylylendiisocyanat, 4,4'-Bisphenylendiisocyanat, 1,4- und 1,5-Naphthylendiisocyanat, Diphenylmethandiisocyanat, Isophorondiisocyanat, Cyclopentylendiisocyanat, Cyclohexylendiisocyanat, Methylcyclohexylendiisocyanat, Dicyclohexylmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewährleistet (Trägergruppen). Geeignete Trägergruppen sind nichtionische Gruppen (Z.B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die zwei mit Isocyanatgruppen reagierende H-aktive Gruppen und mindestens eine zur Anionenbildung befähigte Gruppe enthalten. Geeignete, mit Isocyanatgruppen reagierende Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den anderen gegenüber Isocyanatgruppen reaktiven Gruppen des Moleküls reagieren. Es werden dazu Alkansäuren mit 2 Substituenten am α-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben 2 bis etwa 25, vorzugsweise 3 bis 10 Kohlenstoffatome. Das carboxylgruppenenthaltende Polyol kann 3 bis 100 Gew.-%, vorzugsweise 5 bis 50 Gew.-%, des gesamten Polyol-Bestandteils im NCO-Präpolymeren ausmachen.

Die durch die Carboxylgruppenneutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 6 Gew.-%. Die Menge an Dihydroxialkansäuren im unneutralisierten Präpolymer ergibt eine Säurezahl von wenigstens 5, vorzugsweise wenigstens 10. Bei sehr niedrigen Säurezahlen sind im allgemeinen weitere Maßnahmen zur Erzielung der Wasserdispergierbarkeit erforderlich.
Die obere Grenze der Säurezahl liegt bei 70, vorzugsweise bei 40 mg KOH/g, bezogen auf den Feststoff. Bevorzugt liegt die Säurezahl im Bereich von 20 bis 30 mg KOH/g.

Als Verbindung, die mindestens 2 mit Isocyanatgruppen reagierende Gruppen und mindestens eine zur Anionenbildung befähigte Gruppe enthält, sind beispielsweise Dihydroxipropionsäure, Dimethylolpropionsäure, Dihydroxibernsteinsäure oder Dihydroxibenzoesäure geeignet. Geeignet sind auch die durch Oxidation von Monosacharin zugänglichen Polyhydroxisäuren, zum Beispiel Glykolsäure, Zuckersäure, Schleimsäure, Glykuronsäure und dergleichen.

Aminogruppenhaltige Verbindungen sind beispielsweise α,δ-Diaminovaleriansäure, 3,4-Diaminobenzoesäure, 2,4-Diamino-toluol-sulfonsäure-5, 4,4'-Diamino-di-phenylethersulfonsäure und dergleichen.

Geeignete tertiäre Amine zur Neutralisation der anionischen Gruppen sind beispielsweise Trimethylamin, Triethylamin, Dimethylanilin, Diethylanilin, Triphenylamin, Dimethylethanolamin und dergleichen. Erfolgt die Neutralisation in organischer Phase, wird bevorzugt Triethylamin eingesetzt, bei der Neutralisation in wäßriger Phase bevorzugt Dimethylethanolamin. Als Verbindungen, die zwei gegenüber Isocyanatgruppen reaktive Gruppen aufweisen, jedoch frei von zur Anionenbildung befähigten Gruppen sind, können beispielsweise niedermolekulare Diole oder Diamine mit primären oder sekundären Aminogruppen eingesetzt werden.

In einer zweiten Stufe werden die noch vorhandenen Isocyanatgruppen des Präpolymers mit einem Modifizierungsmittel umgesetzt. Diese Reaktion führt insbesondere zu einer weiteren Verknüpfung und Erhöhung des Molekulargewichts. Die Menge dieses Modifizierungsmittels wird durch seine Funktionalität und den NCO-Gehalt des Präpolymeren bestimmt. Das Äquivalentverhältnis der aktiven Wasserstoffatome im Modifizierungsmittel zu den NCO-Gruppen im Präpolymer sollte in der Regel geringer als 4:1 sein und vorzugsweise im Bereich zwischen 3:1 und 2:1 liegen.

Bevorzugt werden als Modifizierungsmittel für die Umsetzung mit dem Präpolymer Di-, besonders bevorzugt Tri- und/oder Polyole eingesetzt.

Es können aber auch andere Verbindungen mit aktiven Wasserstoffatomen als Modifizierungsmittel eingesetzt werden, beispielsweise Polyamine, allerdings nur unter der Voraussetzung, daß die Umsetzung des Präpolymers mit dem Modifizierungsmittel in einem organischen Lösemittel durchführbar (kontrollierbar) ist und bei dieser Reaktion keine unerwünschten Reaktionen, wie zum Beispiel die beim Einsatz von Polyaminen häufig beobachtete Gelierung an der Eintropfstelle des Amins, auftreten.

Als Beispiel für mindestens 3 Hydroxylgruppen enthaltende Polyole seien Trimethylolpropan, Glycerin, Diglycerin, Erythrit, Mesoerythrit, Arabit, Adonit, u.s.w. genannt. Bevorzugt wird Trimethylolpropan eingesetzt. Die Umsetzung des Präpolymers mit dem Tri- und/oder Polyol wird vorzugsweise durch die Stöchiometrie der eingesetzten Verbindungen so gesteuert, daß es zur Kettenverlängerung kommt.

Die mittels des erfindungsgemäßen Verfahrens hergestellten Polyurethanharze weisen üblicherweise ein zahlenmittleres Molekulargewicht von 1.000 bis 30.000, bevorzugt 1.500 bis 20.000 (bestimmt jeweils gelpermeationschromatographisch mit Polystyrol als Standard), sowie eine Säurezahl von 5 bis 70 mg KOH/g, bevorzugt 10 bis 30 mg KOH/g, auf.

Die nach dem erfindungsgemäßen Verfahren hergestellten, in Ethoxiethylpropionat gelösten Polyurethanharze werden üblicherweise noch mit anderen Lösemitteln weiter verdünnt, so daß bevorzugt Polyurethanharzlösungen mit einem Festkörpergehalt von bis zu 70 Gew.-%, besonders bevorzugt mit einem Festkörpergehalt von 50 bis 60 Gew.-%, erhalten werden. Werden jedoch bereits bei der Herstellung der Polyurethanharze größere Mengen Ethoxiethylpropionat eingesetzt, so kann auch auf das Verdünnen mit anderen organischen Lösemitteln verzichtet werden.

Beispiele für zum Verdünnen der Polyurethanharzlösung geeignete Lösemittel sind Butoxipropanol, Methoxibutanol, Propylenglykolmonopropylether, Propylenglykolmonoisopropylether, Methyldiglykol und Propylenglykolmono-tert.-butylether. Die Auswahl dieser Lösemittel richtet sich nach den gewünschten Eigenschaften der Überzugsmittel.

Die nach dem erfindungsgemäßen Verfahren hergestellten, in Ethoxiethylpropionat hergestellten und ggf. weiter verdünnten Polyurethanharzlösungen können direkt zur Herstellung der Basisfarben eines Mischsystems eingesetzt werden. In diesem Fall werden in die erhaltenen Polyurethanharzlösungen - wie in der DE-OS 41 10 520 beschrieben - nach dem Fachmann bekannten Methoden durch Mischen und gegebenenfalls Dispergieren die weiteren Bestandteile der Basisfarben, wie zum Beispiel Pigmente, übliche Hilfs- und Zusatzstoffe sowie gegebenenfalls andere, zusätzliche Bindemittel u.ä., eingearbeitet.

Zur Herstellung von wasserverdünnbaren Überzugsmitteln unter Verwendung des Mischsystems werden dann kurz vor der Applikation des Überzugsmittels die für den gewünschten Farbton benötigten wasserfreien Basisfarben sowie mindestens eine wasserenthaltende, pigmentfreie Komponente gemischt.

Die nach dem erfindungsgemäßen Verfahren hergestellten, Ethoxiethylpropionat enthaltenden Polyurethanharzlösungen eignen sich außerdem zur Herstellung wäßriger Überzugsmittel. In diesem Fall wird die nach dem erfindungsgemäßen Verfahren hergestellte Ethoxiethylpropionat enthaltende Polyurethanharzlösung in eine wäßrige Phase überführt, indem die Lösung nach dem Fachmann gut bekannten Methoden in Wasser dispergiert wird. Im Gegensatz zu den nach herkömmlichen Verfahren hergestellten Polyurethanharzlösungen ist es nicht erforderlich, das als Lösemittel verwendete Ethoxiethylpropionat abzudestillieren. Das Ethoxiethylpropionat kann vielmehr im Überzugsmittel verbleiben. Gegebenenfalls kann es vorteilhaft sein, dem erhaltenen wäßrigen Überzugsmittel noch weitere Cosolventien zuzusetzen. Hierzu eignet sich insbesondere Butoxipropanol, da mit Butoxipropanol als Cosolvens hervorragende Applikationsergebnisse sowie hervorragende optische und mechanische Eigenschaften der resultierenden Beschichtung erzielt werden. Daneben sind - je nach Einsatzzweck und Anforderungsprofil der Überzugsmittel - auch noch andere Lösemittel als Cosolventien geeignet, wie zum Beispiel 3-Methoxibutanol, Propylenglykolmonopropylether, Propylenglykolmonotert.-butylether, Propylenglykolmonoisopropylether und Butylglykol.

Zur Herstellung wäßriger Überzugsmittel ist es aber auch möglich, die nach dem erfindungsgemäßen Verfahren hergestellten, in Ethoxiethylpropionat gelösten Polyurethanharze zunächst mit den obengenannten Cosolventien weiter zu verdünnen und diese verdünnten Polyurethanharzlösungen dann nach dem Fachmann gut bekannten Methoden in Wasser zu dispergieren. Je nach gewählten Cosolventien ist so die Dispergierung in Wasser ggf. leichter möglich.

Die Herstellung der wäßrigen Überzugsmittel aus den erfindungsgemäß hergestellten Polyurethandispersionen durch Einarbeiten der übrigen Bestandteile, wie zum Beispiel Pigmente, Hilfs- und Zusatzstoffe, weitere Bindemittel u.ä., erfolgt nach gut bekannten, üblichen Methoden (Mischen und ggf. Dispergieren) und braucht daher nicht näher erläutert zu werden.

Die nach dem erfindungsgemäßen Verfahren hergestellten Polyurethanharze eignen sich insbesondere für den Einsatz in Beschichtungsmitteln, die zur Herstellung mehrschichtiger Überzüge verwendet werden.

Gegenstand der vorliegenden Erfindung ist daher auch ein Verfahren zur Herstellung eines mehrschichtigen, schützenden und/oder dekorativen Überzuges auf einer Substratoberfläche, bei dem
1.) eine Basislackbeschichtungszusammensetzung aufgebracht wird,
2.) aus der in Stufe (1) aufgebrachten Zusammensetzung ein Polymerfilm auf der Oberfläche gebildet wird,
3.) auf der so erhaltenen Basisschicht ein transparenter Decklack aufgebracht wird und
4.) die Deckschicht zusammen mit der Basisschicht gehärtet wird.

Das Verfahren ist dadurch gekennzeichnet, daß die in Stufe (1) aufgebrachte Basislackbeschichtungszusammensetzung und/oder der in Stufe (3) aufgebrachte Decklack ein nach dem erfindungsgemäßen Verfahren hergestelltes Polyurethanharz enthält.

Die nach dem erfindungsgemäßen Verfahren hergestellten wäßrigen Polyurethandispersionen eignen sich ferner insbesondere für die Herstellung wäßriger Überzugsmittel für die Beschichtung von Automobilkarossen (Serienlackierung) und/oder Kunststoffteilen. Sie können aber auch auf anderen Substraten, z.B. Glas, Metallen, Holz u.ä. appliziert werden. Ferner werden sie bevorzugt für die Herstellung von wasserverdünnbaren Reparaturlacken, insbesondere im Bereich der Autoreparaturlackierung, eingesetzt. Insbesondere sind sie gut für die Herstellung von wäßrigen Basislacken für die Reparaturlackierung von Automobilen geeignet. Daneben finden die erfindungsgemäß hergestellten Polyurethandispersionen aber auch noch vielfältige, andere Anwendungsgebiete, angefangen bei Klebstoffen über Lederfinishmassen bis hin zu Überzugsmitteln für die unterschiedlichsten Anwendungsgebiete, zum Beispiel Füller oder Überzugsmittel für Industriegüter, Großmaschinen u.a..

Die Erfindung wird nun anhand von Beispielen näher erläutert. Alle Angaben über Teile und Prozente sind dabei Gewichtsangaben, falls nicht ausdrücklich etwas anderes festgestellt wird.

### Polyester A

In einer für die Polyestersynthese üblichen Apparatur werden 891,2 Teile Pripol 1013 (handelsübliche Dimerfettsäure mit einem Monomerengehalt von maximal 0,1 %, einem Trimerengehalt von maximal 2 %, einer Säurezahl von 195 bis 198 mg KOH/g und einer Verseifungszahl von 198 - 202 mg KOH/g), 292,8 Teile Hexandiol-1,6, 360,3 Teile Isophthalsäure und 250,7 Teile Neopentylglykol mit Xylol als Schleppmittel bis zu einer Säurezahl < 5,0 umgesetzt. Das Xylol wird abdestilliert und der Polyester bis zu einer Säurezahl von 3 - 4 gefahren. Der Ansatz wird auf 110°C abgekühlt und mit Ethylethoxipropionat auf 70,2 % Festkörper angelöst. Der Polyester A weist einen Mₙ-Wert von 2333 und einem M_{w}-Wert von 4912 auf.

### Polyester B

In einer für die Polyestersynthese üblichen Apparatur werden 371,2 Teile Pripol 1013, 107,7 Teile Cyclohexandimethanol, 723,3 Teile Hydroxipivalinsäureneopentylglykolester, 17,2 Teile Ethylbutylpropandiol, 392,6 Teile Neopentylglykol, 0,8 Teile n-Butylzinnoxidhydrat und 1018,7 Teile Isophthalsäure mit Cyclohexan als Schleppmittel bis zu einer Säurezahl < 5,0 umgesetzt. Das Cyclohexan wird abdestilliert und der Polyester bis zu einer Säurezahl von < 1,5 gefahren. Der Ansatz wird auf etwa 110°C abgekühlt und mit Ethylethoxipropionat auf 79,5 % angelöst. Der Polyester B weist einen Mₙ-Wert von 2352 und einen M_{w}-Wert von 4578 auf.

### Polyester C

Dieser Polyester entspricht Polyester B, jedoch in N-Methylpyrrolidon auf 79,5 % FK angelöst.

### Beispiele 1 a, 1 b, 1 c und 1 d (Herstellung der Polyurethanharzlösungen 1a - 1d)

In einem 5 l Reaktionsgefäß mit Rührer und Rückflußkühler wird eine Mischung aus 1.462,6 Teilen des Polyesterdiols A, 14,7 Teilen Neopentylglykol, 89,4 Teilen Dimethylolpropionsäure und 450,9 Teilen Tetramethylxyloldiisocyanat auf eine Reaktionstemperatur von a) 95°C, b) 105°C, c) 115°C bzw. d) 125°C erhitzt, bis ein konstanter NCO-Wert des Gemisches erreicht ist. Anschließend gibt man pro Mol Diisocyanatpräpolymer die 1,78-fache Menge an Molen Trimethylolpropan hinzu und läßt abreagieren, bis der Isocyanatgehalt praktisch Null ist. Das Gemisch wird mit 924 Teilen Butoxipropanol angelöst und auf einmal mit 55,7 Teilen N,N-Dimethylethanolamin bei einer Temperatur von 100°C versetzt. Abschließend wurde ein Festkörper von 60 % mit Butoxipropanol eingestellt.

Die Messung der GPC's erfolgte mit Tetrahydrofuran als mobiler Phase bei einer Flußrate von 0,9 ml/min und einem mittleren Druck von 24 bar an einer Trennsäule der Fa. Waters (Kombi) und Polystyrol als Standard.

| Beispiel | 1 a | 1 b | 1 c | 1 d |
|---|---|---|---|---|
| Reaktionstemperatur °C | 95 | 105 | 115 | 125 |
| Mₙ | 7010 | 6784 | 6065 | 5861 |
| M_{w} | 33612 | 33082 | 27655 | 28657 |

### Beispiel 2: Herstellung der Polyurethanharzlösung 2

In einem 5 l Reaktionsgefäß mit Rührer und Rückflußkühler wird eine Mischung aus 1.492,5 Teilen des Polyesterdiols B, 7,4 Teilen Neopentylglykol, 106,7 Teilen Dimethylolpropionsäure und 447,4 Tetramethylxyloldiisocyanat auf eine Reaktionstemperatur von 115°C erhitzt, bis ein konstanter NCO-Wert des Gemisches erreicht ist. Anschließend gibt man auf pro Mol Diisocyanat die 1,88-fache Menge an Molen Trimethylolpropan hinzu und läßt abreagieren, bis der Isocyanatgehalt praktisch Null ist. Das Gemisch wird mit 500 Teilen Butoxipropanol angelöst und auf einmal mit 53,2 Teilen Dimethylethanolamin bei einer Temperatur von 100°C versetzt. Abschließend wurde ein Festkörper von 60 % mit Butoxipropanol eingestellt (Mₙ 5426, M_{w} 18532).

Eine Anlösung von 10 Teilen dieses Harzes mit 3 Teilen N-Methylpyrrolidon wies eine Viskosität von 19 dPas (ICI-Platte Kegel-Viskosimeter) auf. Die Farbzahl nach Gardner beträgt 4 - 5.

### Vergleichsbeispiel 1: Herstellung der Polyurethanharzlösung V1

In einem 5 l Reaktionsgefäß mit Rührer und Rückflußkühler wird eine Mischung aus 995 Teilen des Polyesterdiols C, 4,9 Teilen Neopentylglykol, 71,2 Teilen Dimethylolpropionsäure und 298,3 Teilen Tetramethylxyloldiisocyanat auf eine Reaktionstemperatur von 115°C erhitzt, bis ein konstanter NCO-Wert des Gemisches erreicht ist. Anschließend gibt man pro Mol Diisocyanat die 1,88-fache Menge an Molen Trimethylolpropan hinzu und läßt abreagieren, bis der Isocyanatgehalt praktisch Null ist. Das Gemisch wird mit 500 Teilen Butoxipropanol angelöst und auf einmal mit 35,5 Teilen Dimethylethanolamin bei einer Temperatur von 100°C versetzt. Abschließend wurde ein Festkörper von 60 % mit Butoxipropanol eingestellt (M_{w} 5589, M_{w} 19062).

Eine Anlösung von 10 Teilen dieses Harzes mit 3 Teilen N-Methylpyrrolidon wies eine Viskosität von 32 dPas (ICI Platte-Kegel-Viskosimeter) auf. Die Farbzahl nach Gardner beträgt 7 - 8.

### Beispiel 3: Herstellung einer Polyurethanharzdispersion

In einem 5 l Reaktionsgefäß mit Rührer und Rückflußkühler wird eine Mischung aus 895,5 Teilen des Polyesterdiols B, 4,4 Teilen Neopentylglykol, 64,0 Teilen Dimethylolpropionsäure und 268,5 Teilen Tetramethylxyloldiisocyanat auf eine Reaktionstemperatur von 115°C erhitzt, bis ein konstanter NCO-Wert des Gemisches erreicht ist. Anschließend gibt man auf pro Mol Diisocyanat die 1,88-fache Menge an Molen Trimethylolpropan hinzu und läßt abreagieren bis der Isocyanatgehalt praktisch Null ist. Nach der Zugabe von 38,2 Teilen N,N-Dimethylethanolamin bei 110°C wird eine halbe Stunde gerührt. Danach wird bei 80°C deionisiertes Wasser zugegeben und ein Festkörper von 35,8 % eingestellt. Der pH-Wert der Dispersion betrug 7,4. Die Dispersion ist bei Raumtemperatur über längere Zeit stabil.

### Herstellung der pigmentfreien Mischung B1

Zu 33,2 Teilen der Polyurethanharzdispersion aus Beispiel 3 werden 43 Teile einer vorgequollenen wäßrigen Paste, enthaltend 3 Gew.-% eines anorganischen Natrium-Magnesium-Schichtsilikat-Verdickungsmittels und 3 Gew.-% Polypropylenglykol mit einem zahlenmittleren Molekulargewicht von 900, wobei die Prozente auf das Gesamtgewicht der Paste bezogen sind, 19,8 Teile entionisiertes Wasser, 0,5 Teile eines handelsüblichen Entschäumers und 3,5 Teile einer 3,5%igen Lösung eines handelsüblichen Polyurethanverdickers in Wasser unter Rühren zugesetzt.

### Herstellung einer blaupigmentierten Basisfarbe A1

12 Teile Paliogenblau, 50 Teile der 60%igen, neutralisierten Polyurethanharzlösung 1d, 23 Teile Butylglykol und 15 Teile iso-Butanol werden unter Rühren vermischt und mit einer Sandmühle dispergiert.

### Herstellung einer Aluminium enthaltenden Basisfarbe A2

27 Teile einer gemäß DE-OS 3 636 183 chromatierten Aluminiumbronze (Aluminiumgehalt 65 %, durchschnittlicher Teilchendurchmesser 15 µm) werden in 6,6 Teilen Butylglykol, 23,6 Teilen der 60%igen Polyurethanharzlösung 1d und 13,6 Teilen iso-Butanol durch 15-minütiges Rühren homogen verteilt und anschließend in 29,2 Teile der 60%igen, neutralisierten Polyurethanharzlösung 1 d unter Rühren einfließen lassen. Diese Mischung wird weitere 30 Minuten mit einem Schnellrührer bei 1000 U/min. gerührt.

### Herstellung der Beschichtungszusammensetzungen I bis V

Aus der Polyurethanharzlösung 1d und der Polyurethanharzdispersion aus Beispiel 3 werden wäßrige Beschichtungszusammensetzungen hergestellt, indem die Basisfarbe A1 bzw. A2 direkt nach deren Herstellung in die Mischung B1 eingerührt wird.

Die Viskosität wird anschließend auf eine Auslaufzeit von ca. 25 sec. DIN-4-Becher (20°C) eingestellt.

**Tabelle**

| Zusammensetzung der wäßrigen Basisbeschichtungszusammensetzungen I bis V in Teilen | | | | | |
|---|---|---|---|---|---|
| Beispiel | I | II | III | IV | V |
| A2 | 19,- | 14,25 | 12,7 | 9,5 | 6,3 |
| A1 | - | 4,25 | 5,7 | 8,5 | 11,3 |
| B1 | 81,- | 81,5 | 81,6 | 82,- | 82,4 |
| | 100,- | 100,- | 100,- | 100,- | 100,- |

Direkt im Anschluß nach der Herstellung der wäßrigen Basisbeschichtungszusammensetzungen werden sie nach gut bekannten Methoden auf mit einer handelsüblichen Elektrotauchlackierung und einem konventionellen (d.h. lösemittelhaltigen) oder wasserhaltigen Füller beschichtete phosphatierte Stahlbleche (Bonder 132) gespritzt, nach einer Ablüftzeit von 30 Minuten bei Raumtemperatur (bei einer relativen Luftfeuchtigkeit von 50 % und einer Raumtemperatur von 20°C) mit einem handelsüblichen konventionellen 2-Komponenten-Klarlack auf Basis eines hydroxylgruppenhaltigen Acrylatcopolymerisates und eines Isocyanatvernetzers überlackiert und 30 Minuten bei 60°C getrocknet. Die Trockenfilmschichtdicke der Basisbeschichtungszusammensetzung beträgt ≈15 µm, die des Klarlackes ≈50 µm.

Es werden Beschichtungen erzielt, die bezüglich des metallischen Effekts, der Haftung und der Wolkenfreiheit den in DE-A-41 10 520 beschriebenen Beschichtungen entsprechen.

## Patentansprüche

1. Überzugsmittel auf der Basis von Polyurethanharzen mit einem Polyurethanharz als Bindemittel, welches herstellbar ist, indem in einem Ester als Lösemittel aus
a) mindestens einer Verbindung mit 2 Hydroxyl- und/oder Aminogruppen,
b) mindestens einem Di- und/oder Polyisocyanat,
c) mindestens einer Verbindung, die zwei gegenüber Isocyanatgruppen reaktive Gruppen enthält, wobei zumindest ein Teil dieser Verbindungen mindestens eine Carboxyl-, Sulfonsäuregruppe und/oder Phosphonsäuregruppe aufweist, die vor oder nach dem Einbau der Komponente (c) in das Polyurethanmolekül neutralisiert wird,
d) mindestens einer Verbindung mit mindestens 3 Hydroxyl- und/oder Aminogruppen,
das Polyurethanharz hergestellt wird und wobei Ethoxiethylpropionat als Lösemittel eingesetzt wird.

2. Überzugsmittel nach Anspruch 1, wobei aus den Komponenten (a), (b) und (c) ein endständige Isocyanatgruppen aufweisendes Zwischenprodukt hergestellt wird, dessen freie Isocyanatgruppen anschließend zumindest teilweise mit der Komponente (d) umgesetzt werden und wobei sowohl bei der Herstellung des Zwischenprodukts als auch bei der Umsetzung des Zwischenprodukts mit der Komponente (d) Ethoxiethylpropionat als Lösemittel eingesetzt wird.

3. Überzugsmittel nach Anspruch 1 oder 2, dadurch gekennzeichnet, daß das erhaltene Reaktionsprodukt in eine wäßrige Phase überführt wird und ggf. weitere Lösemittel als Cosolventien zugesetzt werden.

4. Überzugsmittel nach Anspruch 3, dadurch gekennzeichnet, daß Butoxipropanol als Cosolvens zugesetzt wird.

5. Überzugsmittel nach einem der Ansprüche 1 bis 4, dadurch gekennzeichnet, daß das Ethoxiethylpropionat in einer Menge von 50 bis 5 Gew.%, jeweils bezogen auf den Festkörper der Polyurethanharzlösung, eingesetzt wird.

6. Überzugsmittel nach Anspruch 5, dadurch gekennzeichnet, daß das Ethoxiethylpropionat in einer Menge von weniger als 20 Gew.%, jeweils bezogen auf den Festkörper der Polyurethanharzlösung, eingesetzt wird.

7. Überzugsmittel nach einem der Ansprüche 1 bis 6, dadurch gekennzeichnet, daß die Umsetzung der Komponenten (a), (b), (c) und (d) bei einer Reaktionstemperatur von 80 bis 150°C durchgeführt wird.

8. Überzugsmittel nach Anspruch 7, dadurch gekennzeichnet, daß die Umsetzung der Komponenten (a), (b), (c) und (d) bei einer Reaktionstemperatur von 100 bis 120°C durchgeführt wird.

9. Verfahren zur Herstellung von Überzugsmitteln durch Mischen und ggf. Dispergieren der einzelnen Bestandteile, dadurch gekennzeichnet, daß das Überzugsmittel eines der Ansprüche 1 bis 8 ist.

10. Verfahren zur Herstellung eines mehrschichtigen, schützenden und/oder dekorativen Überzuges auf einer Substratoberfläche, bei dem
1.) eine Basislackbeschichtungszusammensetzung aufgebracht wird,
2.) aus der in Stufe (1) aufgebrachten Zusammensetzung ein Polymerfilm auf der Qberfläche gebildet wird,
3.) auf der so erhaltenen Basisschicht ein transparenter Decklack aufgebracht wird und
4.) die Deckschicht zusammen mit der Basisschicht gehärtet wird,
dadurch gekennzeichnet, daß die in Stufe (1) aufgebrachte Basislackbeschichtungszusammensetzung und/oder der in Stufe (3) aufgebrachte Decklack ein Überzugsmittel nach einem der Ansprüche 1 bis 8 ist.

11. Mit einem ggf. mehrschichtigen, schützenden und/oder dekorativen Überzug beschichtetes Substrat, dadurch gekennzeichnet, daß zumindest eine der Lackschichten mit einem Überzugsmittel nach einem der Ansprüche 1 bis 8 gebildet ist.

12. Wasserverdünnbares Überzugsmittel nach einem der Ansprüche 1 bis 8.

13. Verwendung eines Überzugsmittels nach Anspruch 12 für die Beschichtung von Automobilkarossen und/oder Kunststoffteilen und/oder für die Reparaturlackierung.

## Claims

1. Coating composition based on polyurethane resins and containing a polyurethane resin as binder, which can be prepared, in an ester as solvent, by using
a) at least one compound having 2 hydroxyl and/or amino groups,
b) at least one di- and/or polyisocyanate,
c) at least one compound containing two groups which are reactive towards isocyanate groups, these compounds containing, at least in part, at least one carboxylic, sulphonic and/or phosphonic acid group which is neutralized before or after incorporation of component (c) into the polyurethane molecule, and
d) at least one compound having at least 3 hydroxyl and/or amino groups
to prepare the polyurethane resin, and where ethoxyethyl propionate is employed as solvent.

2. Coating composition according to Claim 1, where components (a), (b) and (c) are used to prepare an intermediate which has terminal isocyanate groups, at least some of whose free isocyanate groups are subsequently reacted with component (d) and where ethoxyethyl propionate is used as solvent both in the preparation of the intermediate and in the reaction of the intermediate with component (d).

3. Coating composition according to Claim 1 or 2, characterized in that the resulting reaction product is transferred to an aqueous phase and, if desired, further solvents are added as cosolvents.

4. Coating composition according to Claim 3, characterized in that butoxypropanol is added as co-solvent.

5. Coating composition according to one of Claims 1 to 4, characterized in that the ethoxyethyl propionate is employed in a quantity of from 50 to 5% by weight, based in each case on the solids content of the polyurethane resin solution.

6. Coating composition according to Claim 5, characterized in that the ethoxyethyl propionate is employed in a quantity of less than 20% by weight, based in each case on the solids content of the polyurethane resin solution.

7. Coating composition according to one of Claims 1 to 6, characterized in that components (a), (b), (c) and (d) are reacted at a reaction temperature of from 80 to 150°C.

8. Coating composition according to Claim 7, characterized in that components (a), (b), (c) and (d) are reacted at a reaction temperature of from 100 to 120°C.

9. Process for the production of coating compositions by mixing and, if desired, dispersing the individual components, characterized in that the coating composition is one of [sic] Claims 1 to 8.

10. Process for the production of a multilayer protective and/or decorative coating on a substrate surface, in which
1.)a basecoat composition is applied,
2.)a polymer film is formed on the surface from the composition applied in stage (1),
3.)a transparent topcoat is applied to the resulting basecoat, and
4.)the topcoat is cured together with the basecoat,
characterized in that the basecoat composition applied in stage (1) and/or the topcoat applied in stage (3) is a coating composition according to one of Claims 1 to 8.

11. Substrate coated with a single-layer or multilayer protective and/or decorative coating, characterized in that at least one of the layers of the coating is formed using a coating composition according to one of Claims 1 to 8.

12. Water-dilutable coating composition according to one of Claims 1 to 8.

13. Use of a coating composition according to Claim 12 for coating motor vehicle bodies and/or plastic parts and/or for refinishing.

## Revendications

1. Composition de revêtement à base de résines de polyuréthanne, contenant une résine de polyuréthanne en tant que liant et pouvant être produit en préparant la résine de polyuréthanne à partir de
a) au moins un composé ayant 2 groupes hydroxy et/ou amino,
b) au moins un di- et/ou polyisocyanate,
c) au moins un composé renfermant deux groupes réactifs vis-à-vis des groupes isocyanate, au moins une partie de ces composés renfermant au moins un groupe carboxy, acide sulfonique et/ou acide phosphonique et qui est neutralisé avant ou après l'incorporation du composant (c) dans la molécule de polyuréthanne,
d) au moins un composé ayant au moins 3 groupes hydroxy et/ou amino,
dans un ester en tant que solvant, et en utilisant le propionate d'éthoxyéthyle en tant que solvant.

2. Composition de revêtement selon la revendication 1, où l'on prépare, à partir des composants (a), (b) et (c), un intermédiaire renfermant des groupes isocyanate terminaux, dont les groupes isocyanate libres sont ensuite mis à réagir, au moins partiellement, avec le composant (d) et où aussi bien pour la préparation de l'intermédiaire que pour la réaction de l'intermédiaire avec le composant (d), on utilise le propionate d'éthoxyéthyle en tant que solvant.

3. Composition de revêtement selon la revendication 1 ou 2, caractérisée en ce que le produit de réaction obtenu est transféré dans une phase aqueuse et éventuellement additionné de solvants supplémentaires en tant que co-solvants.

4. Composition de revêtement selon la revendication 3, caractérisée en ce que l'on ajoute du butoxypropanol en tant que co-solvant.

5. Composition de revêtement selon l'une quelconque des revendications 1 à 4, caractérisée en ce que le propionate d'éthoxyéthyle est utilisé en une quantité de 50 à 5% en poids, dans chaque cas par rapport à la teneur en matières solides de la solution de résine de polyuréthanne.

6. Composition de revêtement selon la revendication 5, caractérisée en ce que le propionate d'éthoxyéthyle est utilisé en une quantité inférieure à 20% en poids, dans chaque cas par rapport à la teneur en matières solides de la solution de résine de polyuréthanne.

7. Composition de revêtement selon l'une quelconque des revendications 1 à 6, caractérisée en ce que la réaction des composants (a), (b), (c) et (d) est réalisée à une température de réaction de 80 à 150°C.

8. Composition de revêtement selon la revendication 7, caractérisée en ce que la réaction des composants (a), (b), (c) et (d) est réalisée à une température de réaction de 100 à 120°C.

9. Procédé de production de compositions de revêtements en mélangeant et éventuellement en dispersant les constituants individuels, caractérisé en ce que la composition de revêtement est une composition de revêtement selon les revendications 1 à 8.

10. Procédé de production d'un revêtement multicouche protecteur et/ou décoratif sur une surface de substrat, dans lequel
1.) on applique une composition de revêtement de couche de fond,
2.) il se forme un film polymère sur la surface à partir de la composition appliquée à l'étape (1),
3.) on applique une couche de finition transparente sur la couche de fond ainsi obtenue, et
4.) on cuit la couche de finition conjointement avec la couche de fond,
caractérisé en ce que la composition de revêtement de couche de fond appliquée à l'étape (1) et/ou la couche de finition appliquée à l'étape (3) sont une composition de revêtement selon l'une quelconque des revendications 1 à 8.

11. Substrat revêtu d'un revêtement éventuellement multicouche, protecteur et/ou décoratif, caractérisé en ce qu'au moins l'une des couches est formée à l'aide d'une composition de revêtement selon l'une quelconque des revendications 1 à 8.

12. Composition de revêtement diluable à l'eau selon l'une quelconque des revendications 1 à 8.

13. Utilisation d'une composition de revêtement selon la revendication 12 pour le revêtement de carrosseries d'automobiles et/ou de composants plastiques et/ou pour les retouches.
